# EUROPEAN PATENT APPLICATION

(11) **EP 1 403 117 A2**
(43) Date of publication of application: **31.03.2004**
(21) Application number: 03021560.2
(22) Date of filing: 24.09.2003
(51) Int. Cl.: B60K 6/04, F16D 27/00, H02K 7/10, F02N 11/08, F16F 15/00

(54) **Drive apparatus for hybrid vehicle**

(30) Priority: 24.09.2002 JP 2002276726
(71) Applicant: JATCO Ltd, Fuji-shi, Shizuoka 417-8585 (JP)
(72) Inventor: Katou, Yoshiaki, Fuji-shi Shizuoka 417-8585 (JP); Iizuka, Kouichi, Fuji-shi Shizuoka 417-8585 (JP)
(74) Representative: Grünecker, Kinkeldey, Stockmair & Schwanhäusser Anwaltssozietät

(57) **Abstract**

A drive apparatus for a vehicle, the vehicle being comprised of an engine (70), a motor-generator (20) capable of starting the engine as well as generating power, a battery (93) connected to the motor generator (20), and a clutch (30) disposed between the motor-generator and a transmission. The drive apparatus is comprised of a damper (10) connected to the rear of the engine, a starter motor (15) connected to the engine, and a control system which effects idle-stop control when a set of conditions is met including oil temperature being within a predetermined range. The motor-generator (20) starts the engine instead of the starter motor (15) only when the engine is being restarted at the end of idle-stop control. Engine rotation flows from the engine (70) first through the damper (10) and then through the motor-generator (20) before flowing to the clutch (30) and then to the transmission.

## Description

### BACKGROUND OF THE INVENTION

The present invention relates to a drive apparatus for a vehicle which has an engine and a motor which also serves as a generator, power to drive the vehicle being produced by either the engine alone or by both the engine and the motor, the power of the engine and the motor being transmitted via a transmission to a differential assembly.

Honda R&D Technical Review Vol. 12 No. 2 (October 2000) discloses a drive apparatus for a hybrid vehicle where an engine is connected to a belt-type continuously variable transmission via a motor-generator and damper which are disposed behind an output-shaft end of an engine. Japanese Patent Provisional Publication No. 2000-289475 discloses a drive apparatus for a hybrid vehicle wherein a motor-generator is disposed between an engine and an automatic transmission, and starting of the engine is performed by the motor-generator.

### SUMMARY OF THE INVENTION

However, there is a requirement for enough drive torque to start an engine, especially during extremely low outdoor temperatures when engine friction is large, and since starting of the engine is carried out by a starter generator located directly behind an output-shaft end portion of an engine, a large starter generator is necessary. With a large starter generator, the axial dimension, or length, of the drive apparatus is necessarily large. Also, a high-cost starter generator must be used, which is a cost burden.

It is therefore an object of the present invention to provide a drive apparatus for a hybrid vehicle which is compact and can be provided at a lower cost.

An aspect of the present invention resides in a drive apparatus for a hybrid vehicle, the drive apparatus comprising an internal combustion engine, a damper connected on one side thereof to a rear of the engine, a motor-generator connected on one side thereof to another side of the damper, the motor-generator being capable of starting the engine, a clutch connected on one side thereof to another side of the motor-generator, a transmission connected to the internal combustion engine via the damper, the motor-generator, and the clutch, and a starter motor connected to the damper, the starter motor being capable of starting the engine.

Another aspect of the present invention resides in a drive apparatus for a vehicle, the vehicle comprising an engine and a transmission, the drive apparatus comprising a battery, damping means for reducing transmitted vibration, the damping means being disposed behind the engine, restarting means for restarting the engine under a predetermined set of conditions, the restarting means also serving to charge the battery, the restarting means being disposed behind the damping means, engaging means for allowing or interrupting power flow from the engine, the engaging means being disposed behind the restarting means, normal starting means for starting the engine under conditions other than the predetermined set of conditions, and control means for controlling the engine, the normal starting means, the restarting means, the engaging means, and the transmission.

A further aspect of the present invention resides in a drive system for a hybrid vehicle, the hybrid vehicle comprising an engine, and a clutch which allows or interrupts transmission of power from the engine to a transmission, the drive system comprising a motor-generator which is connected from a rear thereof to the transmission, the motor-generator being both capable of driving the engine as a starter motor and of generating electrical power, a damper which is joined at one end thereof via an elastic member thereof to an input shaft which supports the motor-generator and at another end thereof to an output shaft of the engine, a starter motor which is connected to the engine, and a control system which detects a speed of the vehicle, a state of a brake switch, and a temperature of oil in the transmission, and which determines execution of an idle-stop function to temporarily stop the engine, the control system executing the idle-stop function if a set of idle-stop conditions including the vehicle speed being 0 km/h, the brake switch being in an ON state, and the oil temperature being within a predetermined range are met, the engine being started with the motor-generator when the brake pedal is released during execution of the idle-stop function.

### BRIEF DESCRIPTION OF THE DRAWINGS

Fig. 1 is a block diagram showing a drive apparatus for a vehicle according to a first embodiment of the present invention.

Fig. 2 is a cross-sectional view of the drive apparatus of Fig. 1.

Fig. 3A is a block diagram of a drive apparatus according to the related art showing occurrence of torsional vibration.

Fig. 3B is a block diagram of a drive apparatus according to the present invention showing an effect of torsional vibration being reduced.

Fig. 4 is a graph showing a relationship between resonance level and frequency.

Fig. 5 is a cross-sectional view showing a drive apparatus for a vehicle according to a second embodiment of the present invention.

### DETAILED DESCRIPTION OF THE INVENTION

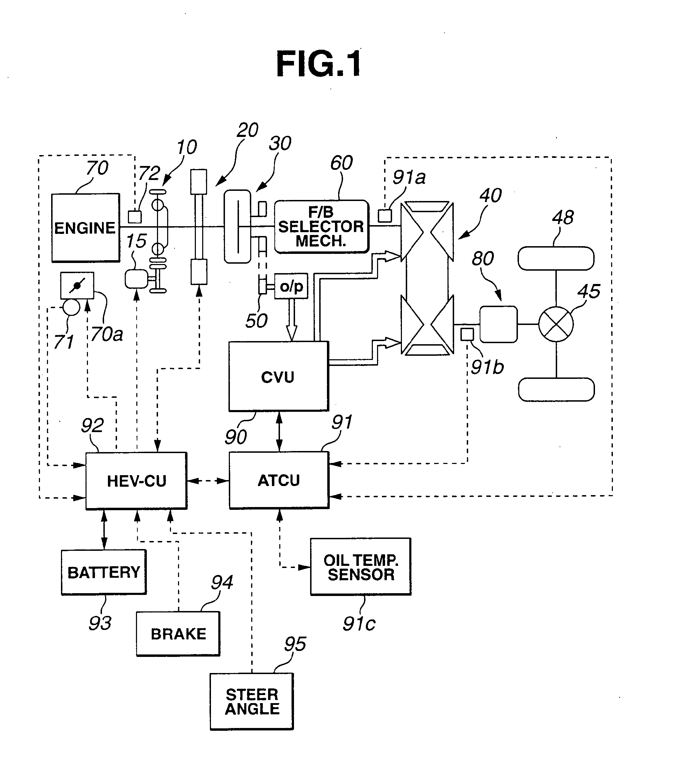

Referring to Figs. 1 to 4, there is discussed a first embodiment of a drive apparatus for a hybrid vehicle in accordance with the present invention.

As shown in Fig. 1, the hybrid vehicle comprises an internal combustion engine 70 and a motor-generator 20. Motor-generator 20 is connected to an output shaft of engine 70 via damper 10. A belt-type continuously variable transmission (CVT) 40 is connected to motor-generator 20 via a multi-plate-type magnetic clutch 30 and a forward/back selector mechanism 60. Power transmitted to CVT 40 is outputted to wheels 48 via a reduction mechanism 80 and a differential assembly 45. A starter motor 15 is connected to damper 10, and an oil pump 50 is connected to motor-generator 20. A control valve unit 90 is connected to both oil pump 50 and CVT 40.

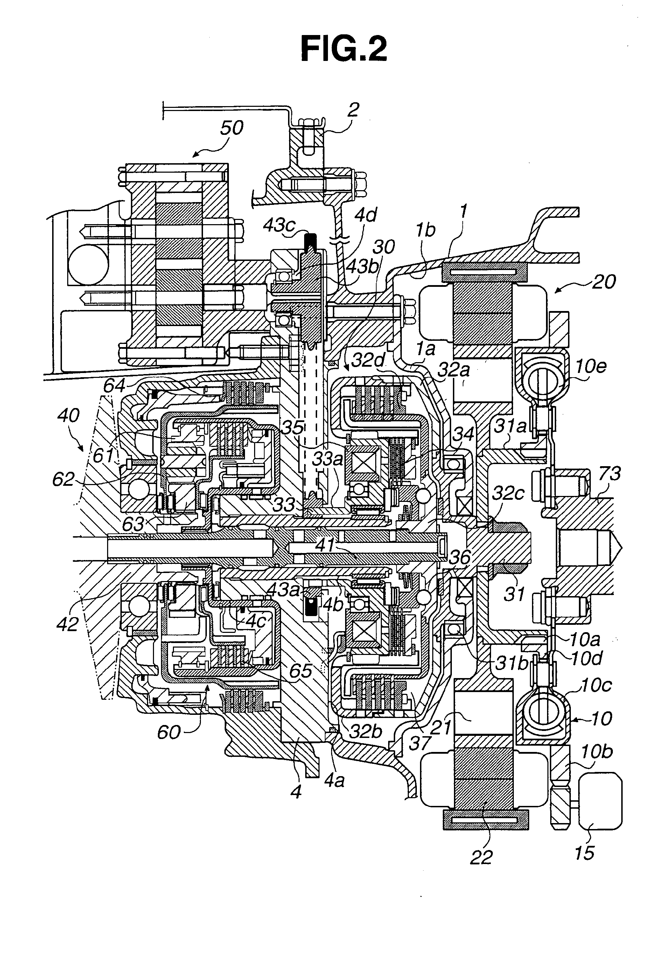

Explained more specifically with reference to Figs. 1 and 2, a drive apparatus comprises a first case member 1, a front cover 1a which is bolted to first case member 1, damper 10 joined at one end thereof to the output shaft at a rear or crank end of engine 70, and motor-generator 20 joined to another end of damper 10 so as to be behind damper 10. Damper 10 and motor-generator 20 are contained in first case member 1 on a side of front cover 1a which is nearest engine 70. Magnetic clutch 30 is disposed on the other side of front cover 1a and is thus connected to a rear of motor-generator 20. CVT 40 is located behind magnetic clutch 30, and is connected to magnetic clutch 30 via forward/back selector switch 60. Rotational torque thus flows from engine 70 to damper 10 and continues through motor-generator 20 to magnetic clutch 30. Rotational torque next continues through forward/back selector mechanism 60 and onto CVT 40. Magnetic clutch 30 engages or disengages to respectively allow or interrupt flow of rotational torque. Front cover 1a is made of a magnetic material such as iron, and serves to prevent magnetic force of motor-generator 20 from affecting magnetic clutch 30. Also, an outer diameter of damper 10 and an outer diameter of magnetic clutch 30 are respectively less than an outer diameter of a rotor 21 of motor-generator 20.

A shaft stator 4 is bolted to a second case member 2. Shaft stator 4 comprises a dividing wall portion 4a which separates magnetic clutch 30 and forward/back selector mechanism 60, a shaft support portion 4b which supports a first input shaft 31 to be rotatable, a drum support portion 4c which axially supports forward/back selector mechanism 60 on an outer circumference thereof, and a chain sprocket support portion 4d which supports a driven chain sprocket 43b used in driving oil pump 50. A drive chain sprocket 43a is supported to be rotatable around shaft support portion 4b, and drives driven chain sprocket 43b via a chain 43c.

With reference to Figs. 2, damper 10 comprises an outer member 10c which is directly connected to an engine output shaft 73, an inner member 10d which is directly connected to first input shaft 31, and a spring 10e which is disposed between outer member 10c and inner member 10d. Inner member 10d is thus joined to outer member 10c via spring 10e. An outer circumference ring gear 10b is disposed on an outer circumference of outer member 10c, and meshes with starter motor 15 only when starter motor 15 is used to drive engine 70. Starter motor 15 is a normal 12V starter, and starts engine 70 in the same manner as in a conventional car. A damper spline hub 10a is disposed on an inner circumference of inner member 10d, and is splined to an input-shaft spline hub 31a which is splined to first input shaft 31. Rotor 21 of motor-generator 20 is fixed to input-shaft spline hub 31a by press-fitting, and a stator 22 is fixed to first case member 1 by press-fitting. Thus, elements including damper spline hub 10a and input-shaft spline hub 31a, and first case member 1, can be easily exchanged as required, according to the highest output power available with a particular engine.

First input shaft 31 is supported to be rotatable by front cover 1a via bearing 31b. First input drum 32a of magnetic clutch 30 is joined to first input shaft 31 to form an integral body.

Magnetic clutch 30 comprises a main clutch 37, a pilot clutch 34 having a smaller diameter than main clutch 37, a cam mechanism 36, and an electromagnet 35. Pilot clutch 34 is made to engage by an attraction force of electromagnet 35. Engagement force of pilot clutch 34 is changed by cam mechanism 36 into axial-direction thrust to increase torque. Main clutch 37 then engages due to the axial-direction thrust increased by cam mechanism 36. Leakage flux of motor-generator 20 is absorbed by front cover 1a, therefore the clutch torque of pilot clutch 34, which is made to engage by attraction force of electromagnet 35, is not affected.

Main clutch 37 comprises a first input drum 32a, a second input drum 32b which is splined to first input drum 32a to be slidingly movable in the axial direction, a main clutch hub 32c which is splined to a second input shaft 41, and a set of clutch plates 32d. A rotor 33 is splined to an inner circumference of second input drum 32b to be slidingly movable in the axial direction.

Electromagnet 35, which makes pilot clutch 34 engage, is fixed to rotor 33, and rotor 33 comprises an oil pump drive tooth 33a at a tip end thereof which is fitted into drive chain sprocket 43a. Engine drive power is transmitted through, and in order of, first through damper 10, first input shaft 31, first input drum 32a, second input drum 32b, rotor 33, and drive chain sprocket 43a, regardless of the state of engagement of magnetic clutch 30. Thus, when engine 70 is driving, i.e., when there is output rotation from engine 70, drive chain sprocket 43a is driven, resulting in oil pump 50 also being driven, so that fluid line pressure is maintained.

Magnetic clutch 30 is joined at an output end thereof to second input shaft 41, and forward/back selector mechanism 60 is also disposed on second input shaft 41. Forward/back selector mechanism 60 comprises a planetary gearset which comprises a ring gear 61 joined to second input shaft 41, a carrier 62, and a sun gear 63 joined to a transmission input shaft 42. A reverse brake 64 is disposed on an outer circumference of carrier 62, reverse brake 64 being fixable to a transmission case, and a forward clutch 65 is disposed inside forward/back selector mechanism 60, forward clutch 65 being capable of fixably coupling ring gear 61 and sun gear 63.

Referring to Fig. 1, CVT 40 is connected at a drive pulley thereof to forward/back selector mechanism 60. Reduction mechanism 80 is connected to a driven pulley of CVT 40, and differential assembly 45 is connected to reduction mechanism 80. The speed of rotation which is output from forward/back selector mechanism 60 is changed by CVT 40, and is output via reduction mechanism 80 and differential assembly 45 to wheels 48.

Control valve unit 90 is hydraulically connected to oil pump 50 and CVT 40, and controls line pressure of CVT 40 with oil pump 50 acting as a source of line pressure. A drive apparatus according to the present invention also comprises a control system which controls the states of various elements of a vehicle. The control system comprises CVT control unit 91 (hereafter, ATCU 91) as a transmission control unit which outputs command signals to control valve unit 90, and a hybrid control unit 92 (hereafter, HEV-CU 92) which functions to effect vehicle drive control. A battery 93 is connected to HEV-CU 92.

Signals are sent to ATCU 91 from a primary rotation sensor 91a which detects a number of rotations of input rotation of CVT 40, from a secondary rotation sensor 91b which detects a number of rotations of output rotation of CVT 40, from an oil temperature sensor 91c, and from control valve unit 90. A command signal is then sent to control valve unit 90, and shift control, i.e., gear shift is performed according to the running condition of a vehicle.

Signals are sent to HEV-CU 92 from a throttle sensor 71 which detects a degree of opening of a throttle 70a, from an engine sensor 72 which detects a number of rotations of engine rotation of engine 70, from a brake sensor 94 which detects the depressed state of the brake pedal, and from a steer angle sensor 95 which detects a steer angle. Throttle sensor 71 is disposed on engine 70 and is electronically controlled. A signal is also sent from battery 93 which indicates a state of charge (SOC) thereof. HEV-CU 92 controls the state of drive of engine 70 as well as the state of drive of starter motor 15 and motor-generator 20, and also controls the state of engagement of magnetic clutch 30. ATCU 91 and HEV-CU 92 are linked by an intercommunication system, whereby necessary signals are mutually sent and received, in order to effect drive control appropriate to the running condition of a vehicle.

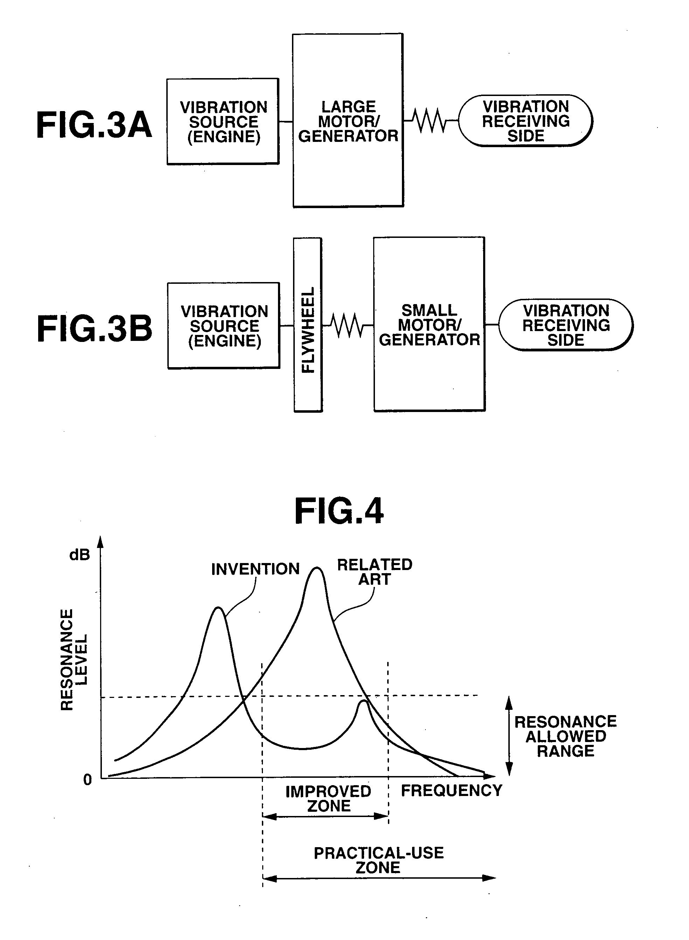

Reduction of torsional vibration made possible by the present invention will now be explained with reference to Figs. 3A and 3B, wherein torsional vibration is represented by a zigzagged line. With reference to Fig. 3A, torsional vibration occurring in the related art is output from an engine and a large-size motor-generator. The torsional vibration is then transmitted via a damper to a vibration receiving side. In contrast, with the present invention as shown in Fig. 3B, torsional vibration is output from an engine and then transmitted via a damper to a small-size motor-generator. Torsional vibration then continues on to a vibration receiving side.

Referring to Fig. 4, it can be seen that the resonance level of torsional vibration which is transmitted within a practical-use frequency zone is large in an instance where a large-size motor-generator is directly connected to an output shaft of an engine, as with the related art. However, with the present invention, by providing starter motor 15 and motor-generator 20 separately, a smaller motor-generator can be provided, and by providing damper 10 between engine 70 and small-size motor-generator 20, a large reduction in resonance level is achieved in the practical-use frequency zone.

By providing starter motor 15 separately for normal engine starting, such as when launching a vehicle, a hybrid vehicle can be equipped with a smaller-size motor-generator. This allows the drive apparatus to have a more compact design, and also results in a reduction in cost.

Operation of a drive apparatus according to the present invention will now be explained. Under conditions where a large amount of driving force is required, such as when a vehicle is accelerating or when climbing an inclined surface, motor-generator 20 assists engine 70 in moving a vehicle. This is achieved by motor-generator 20 providing driving force that is combined with a driving force of engine 70. Under different conditions where there is enough driving force being output from engine 70, such as when running at a constant low speed or when traveling down an inclined surface, motor-generator 20 functions as a generator to charge battery 93. Also, when the vehicle temporarily stops during normal running and given certain conditions, idle-stop control is effected. Idle-stop control is implemented in a vehicle as a way of improving fuel efficiency, and when a set of prescribed conditions is met, idle-stop control then functions to stop engine 70. Once the vehicle is again made to proceed, engine 70 is quickly restarted. This set of conditions is set forth in the following discussion of the difference between normal engine starting and engine restarting under idle-stop control.

Normal engine starting is performed by starter motor 15. Often, normal starting of an engine is performed under such conditions as oil temperature being less than optimal. When the oil temperature is low, this results in a high oil viscosity, which increases load during starting of an engine. Therefore, starter motor 15 is a normal 12V starter motor used for starting engine 70 under such conditions.

Idle-stop control is effected to stop an engine if each of the following conditions has been met when a vehicle is running.
1) vehicle speed = 0 km/h
2) brake switch is ON
3) steer angle = 0°
4) not R range
5) oil temperature is within predetermined range
A state of the brake switch is determined from brake sensor 94, a steer angle from steer angle sensor 95, and a temperature of oil in the transmission from oil temperature sensor 91c. A speed of the vehicle is determinable from secondary rotation sensor 91b, and a range of the transmission from primary rotation sensor 91a. Thus, among the above prerequisites, the temperature of the oil in the transmission also factors into the determination by the control system as to whether to effect idle-stop control or not. By determining that the temperature of the oil is within a predetermined range, it is determined that the viscosity of the oil is such that a large load will not be encountered when starting engine 70, and therefore, engine 70 can be restarted with relatively little effort. Therefore, it is not necessary for motor-generator 20 to be a large-size motor-generator capable of driving a heavier load, and thus, according to the present invention, motor-generator 20 is designed with a small and compact structure.

Therefore, for any other set of conditions where the above criteria are not met, including temperature of oil in the transmission being outside the predetermined range, engine starting is deemed to be normal engine starting, and is performed by starter motor 15.

The flow of operation of idle-stop control will now be explained, particularly as regards the manner in which oil temperature factors into idle-stop control.
1) ATCU 91 has received a signal from secondary rotation sensor 91b indicating the vehicle is stopped, and a signal from primary rotation sensor 91a indicating the transmission is in a range other than reverse to meet conditions 1 and 2.
2) ATCU 91 sends corresponding flag signals to HEV-CU 92.
3) ATCU 91 receives a signal from oil temperature sensor 91c indicative of the temperature of the oil in the transmission.
4) ATCU 91 determines that the oil temperature is within a predetermined range to meet condition 5.
5) ATCU 91 sends a corresponding flag signal to HEV-CU 92.
6) HEV-CU 92 has received a signal from steer angle sensor 95 indicating the steer angle is 0 degrees, and a signal from brake sensor 94 indicating the brake pedal is being depressed to meet conditions 3 and 4.
7) Idle-stop control is effected by HEV-CU 92. Engine 70 is stopped as a result.
8) Eventually, when a driver releases the brake, HEV-CU 92 receives a signal from brake sensor 94 indicating the brake pedal has been released, which is interpreted as the driver's intention to make the vehicle proceed once again.
9) HEV-CU 92 then sends command signals to magnetic clutch 30 to engage and to motor-generator 20 to commence driving engine 70.

Also, by provision of magnetic clutch 30, torque above a predetermined level is not transmitted due to current control. Thus, even if a sudden surge of torque should occur immediately after combustion is complete in engine 70, the vehicle is able to resume running smoothly. Also, following engine restarting, transmitted engine output torque is maintained at a reduced level by magnetic clutch 30 until an amount of oil enough to prevent belt-slippage as well as to secure forward clutch pressure is achieved by pump 50. The durability of CVT 40 is assured by this measure.

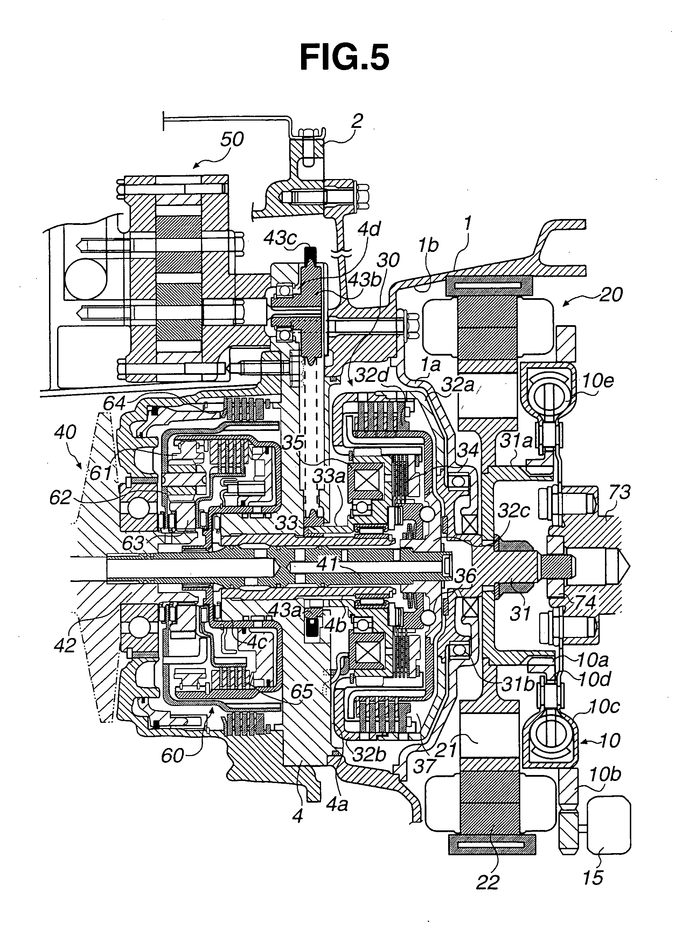

A second embodiment according to the present invention will now be explained with reference to Fig. 5. In the second embodiment, a dry bearing 74, not present in the first embodiment, is disposed in an end of engine output shaft 73 such that dry bearing 74 is connectable with first input shaft 31. Other than dry bearing 74, all elements and reference' numbers of the first embodiment are the same. Referring to Fig. 5, an end of first input shaft 31 which is nearest engine 70 is extended axially, and passes through dry bearing 74 to be supported by dry bearing 74. Therefore, first input shaft is supported at both ends thereof, at one end by bearing 31b, and at another end by dry bearing 74. By supporting first input shaft 31 at two points in this manner, a space between rotor 21 and stator 22 of motor-generator 20 can be regulated with precision. The efficiency of motor-generator 20 is improved in this manner.

Thus, according to a first embodiment of a drive apparatus according to the present invention, by disposing damper 10 between starter motor 15 and motor-generator 20, a resonance point is lowered, i.e., vibration is reduced, within a practical-use frequency zone. Also, by providing motor-generator 20 and a normal 12V starter motor for starter motor 15 separately, engine starting can be performed by starter motor 15 when there is a large engine load, and by motor-generator 20 when there is a light load. Motor-generator 20 is thus designed with a smaller size, and therefore the driving apparatus is more compact and can be provided at lower cost.

Also, by disposing outer circumference ring gear 10b on an outer circumference of outer member 10c of damper 10 to mesh with starter motor 15, a starter motor layout commonly found in vehicles is maintained. It is therefore only necessary to change the transmission unit of a vehicle.

By providing magnetic clutch 30, clutch engagement control is executed electrically, and controllability is thus improved. Also, by disposing front cover 1a made of magnetic material between motor-generator 20 and magnetic clutch 30, leakage flux of motor-generator 20 is prevented from affecting engagement force of magnetic clutch 30.

Further, by providing electromagnetically-controlled pilot clutch 34 and cam mechanism 36 which changes engagement force of pilot clutch 34 to axial-direction thrust, a large engagement force to be applied to main clutch 37 is achieved with a small electromagnetic force.

Also, by setting the outer diameter of rotor 21 of motor-generator 20 larger than the respective outer diameters of main clutch 37 and damper 10, stator 22 of motor generator 20 overlaps magnetic clutch 30 and damper 10 in the radial direction around the respective outer circumferences thereof, and the dimension of the drive apparatus is therefore shortened in the axial direction. Also, by disposing stator 22 of motor-generator 20 around the respective outer circumferences in the radial direction, a diameter of rotor 21 is large. That is, since a rotational inertia of rotor 21 is proportional to the square of the radius thereof, a large rotational inertia is gained through rotor 21 having a large diameter. The result is that torsional vibration is reduced with greater effect.

By providing idle-stop control to stop engine 70 under a specific set of conditions, fuel efficiency is improved.

And according to a second embodiment of the present invention, by extending a tip end of first input shaft 31 to be supported via dry bearing 74 inside an end of the output shaft of engine 70, first input shaft 31 is supported at two points. This allows the space between rotor 21 and stator 22 to be regulated with precision, and improves the efficiency of motor-generator 20

This application is based on a prior Japanese Patent Application No. 2002-276726. The entire contents of Japanese Patent Application No. 2002-276726 with a filing date of September 24, 2002 are hereby incorporated by reference.

Although the invention has been described above by reference to certain embodiments of the invention, the invention is not limited to the embodiments described above. Modifications and variations of the embodiments described above will occur to those skilled in the art in light of the above teachings. For example, although the embodiments of the present invention were described as applied to a belt-type continuously variable transmission, the present invention is also applicable to a gear-type conventional transmission. The scope of the invention is defined with reference to the following claims.

## Claims

1. A drive apparatus for a hybrid vehicle, the drive apparatus comprising:
an internal combustion engine;
a damper connected on one side thereof to a rear of the engine;
a motor-generator connected on one side thereof to another side of the damper, the motor-generator being capable of starting the engine;
a clutch connected on one side thereof to another side of the motor-generator;
a transmission connected to the internal combustion engine via the damper, the motor-generator, and the clutch; and
a starter motor connected to the damper, the starter motor being capable of starting the engine.

2. The drive apparatus as claimed in claim 1, the drive apparatus further comprising
a front and back selector mechanism via which the transmission connects to the clutch, and
a control system controlling a drive state of the motor-generator, the starter motor, an engagement state of the clutch, and a shift state of the transmission.

3. The drive apparatus as claimed in claim 1, wherein the clutch engages by electromagnetic force, and a dividing wall of magnetic material is disposed between the motor-generator and the clutch.

4. The drive apparatus as claimed in claim 3, wherein the clutch comprises a pilot clutch of small diameter which engages by electromagnetic force, a cam mechanism which changes engagement force of the pilot clutch into axial-direction thrust, and a main clutch of large diameter which is made to engage by the axial-direction thrust.

5. The drive apparatus as claimed in claim 1, wherein the motor-generator comprises a rotor, an outer diameter of the rotor being greater than respective outer diameters of the clutch and the damper, the motor-generator being disposed between the damper and the clutch.

6. The drive apparatus as claimed in claim 2, wherein the control system comprises
a vehicle speed sensor which detects whether the vehicle is stopped,
a brake sensor which detects a depressed state of a brake pedal, and
an oil temperature sensor which detects an oil temperature of oil in the transmission,
the control system executing idle-stop control to stop the engine when the vehicle is stopped, the brake pedal is depressed, and the oil temperature is within a predetermined range indicative that oil viscosity is optimal for restarting the engine with the motor-generator, idle-stop control again starting the engine when the brake pedal has been released,
the control system starting the engine with the starter motor during normal engine starting as well as when the oil temperature is outside the predetermined range, the control system starting the engine with the motor-generator only when a command signal to start the engine has been sent by idle-stop control.

7. The drive apparatus as claimed in claim 6, wherein the control system comprises a first control unit and a second control unit,
the first control unit sending a flag signal to the second control unit after having determined that the oil temperature is within the predetermined range,
the second control unit executing idle-stop control after having received the flag signal and also after having determined that the vehicle is stopped and the brake pedal is depressed,
the second control unit again starting the engine when the brake pedal has been released.

8. The drive apparatus as claimed in claim 3, wherein the motor-generator is supported on an input shaft which is joined to a clutch drum of the clutch as an integral body, the input shaft being supported by the dividing wall via a bearing.

9. The drive apparatus as claimed in claim 8, wherein a tip end of the input shaft is extended so as to be disposed within and supported by an end of the output shaft of the engine via a bearing.

10. The drive apparatus as claimed in claim 1, wherein the motor-generator comprises a stator which overlaps the clutch and the damper in the radial direction around the respective outer circumferences thereof.

11. The drive apparatus as claimed in claim 6, wherein the control system comprises a transmission control unit and a hybrid control unit, the transmission control unit controlling the shift state of a continuously variable transmission,
the transmission control unit receiving signals from the oil temperature sensor indicative of the oil temperature, the transmission control unit sending a flag signal to the hybrid control unit when the oil temperature is within the predetermined range,
the hybrid control unit executing idle-stop control to stop the engine after having received the flag signal, a signal from the vehicle speed sensor indicative that the vehicle is stopped, and a signal from the brake sensor indicative that the brake pedal is depressed,
the hybrid control unit ending idle-stop control by sending a signal to the motor-generator to start the engine after receiving a signal from the brake sensor indicative that the brake pedal is released.

12. The drive apparatus as claimed in claim 1, wherein the damper further comprises a ring gear disposed on an outer circumference thereof, the ring gear meshing with the starter motor.

13. A drive apparatus for a vehicle, the vehicle comprising an engine and a transmission, the drive apparatus comprising:
a battery;
damping means for reducing transmitted vibration, the damping means being disposed behind the engine;
restarting means for restarting the engine under a predetermined set of conditions, the restarting means also serving to charge the battery, the restarting means being disposed behind the damping means;
engaging means for allowing or interrupting power flow from the engine, the engaging means being disposed behind the restarting means;
normal starting means for starting the engine under conditions other than the predetermined set of conditions; and
control means for controlling the engine, the normal starting means, the restarting means, the engaging means, and the transmission.

14. The drive apparatus as claimed in claim 13, wherein the engaging means comprises a magnetic clutch, and the drive apparatus further comprises preventative means for preventing the restarting means from electromagnetically influencing the magnetic clutch, the magnetic clutch comprising
an electromagnet,
a pilot clutch which is made to engage by the electromagnet, and
a main clutch larger than the pilot clutch, the main clutch being made to engage under applied axial-direction thrust which has been transformed from engagement force of the pilot clutch, engagement force of the pilot clutch being transformed by a torque cam mechanism.

15. The drive apparatus as claimed in claim 13, wherein the control means comprises
vehicle speed detection means for detecting a speed of the vehicle,
brake detection means for detecting a depressed state of a brake pedal, and
oil temperature detection means for detecting the temperature of oil in the transmission,
the control means executing idle-stop control to stop the engine when the vehicle is stopped, the brake is depressed, and the oil temperature is within a predetermined range where oil viscosity is optimal for starting the engine with the restarting means, the engine being restarted when the brake pedal is released,
the engine being started by the restarting means instead of the normal starting means only after idle-stop control has been executed.

16. The drive apparatus as claimed in claim 13, wherein an input shaft is supported via a bearing by the preventative means, the input shaft both supporting the restarting means and forming an integral body with a clutch drum of the engaging means, the damping means being joined at one end thereof to the input shaft and at another end thereof to an output shaft of the engine.

17. The drive apparatus as claimed in claim 16, wherein the input shaft is supported at a tip end thereof via a bearing within the output shaft of the engine, the input shaft thereby being supported at two locations.

18. A drive system for a hybrid vehicle, the hybrid vehicle comprising an engine, and a clutch which allows or interrupts transmission of power from the engine to a transmission, the drive system comprising:
a motor-generator which is connected from a rear thereof to the transmission, the motor-generator being both capable of driving the engine as a starter motor and of generating electrical power;
a damper which is joined at one end thereof via an elastic member thereof to an input shaft which supports the motor-generator and at another end thereof to an output shaft of the engine;
a starter motor which is connected to the engine; and
a control system which detects a speed of the vehicle, a state of a brake switch, and a temperature of oil in the transmission, and which determines execution of an idle-stop function to temporarily stop the engine,
the control system executing the idle-stop function if a set of idle-stop conditions including the vehicle speed being 0 km/h, the brake switch being in an ON state, and the oil temperature being within a predetermined range are met,
the engine being started with the motor-generator when the brake pedal is released during execution of the idle-stop function.

19. The drive system as claimed in claim 18, wherein the clutch comprises a main clutch which engages by an electromagnetically-controlled pilot clutch, a wall of magnetic material being disposed between the clutch and the motor generator.

20. The drive system as claimed in claim 18, wherein the control system also detects a range of the vehicle and a steer angle, the set of idle-stop conditions also including the range of the vehicle not being in the R range and the steer angle being 0 degrees.
